(19) **Europäisches Patentamt / European Patent Office / Office européen des brevets**

(11) **EP 2 441 996 B1**

(12) **EUROPÄISCHE PATENTSCHRIFT**

(45) Veröffentlichungstag und Bekanntmachung des Hinweises auf die Patenterteilung:
**22.06.2016 Patentblatt 2016/25**

(51) Int Cl.:
*F16L 11/14* (2006.01)   *H02G 3/04* (2006.01)
*H02G 11/00* (2006.01)

(21) Anmeldenummer: **11177817.1**

(22) Anmeldetag: **17.08.2011**

(54) **Balg und flexibles Leitungselement mit einem solchen**

Bellows and flexible line element with same

Poutre et élément de guidage flexible doté de celle-ci

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2010 DE 202010014350 U**

(43) Veröffentlichungstag der Anmeldung:
**18.04.2012 Patentblatt 2012/16**

(73) Patentinhaber: **Witzenmann GmbH**
**75175 Pforzheim (DE)**

(72) Erfinder:
• **Almeida, Artur**
**75223 Niefern (DE)**
• **Renard, Nicolas**
**76137 Karlsruhe (DE)**
• **Saint-Julien, Patrick**
**75177 Pforzheim (DE)**

(74) Vertreter: **Lemcke, Brommer & Partner**
**Patentanwälte Partnerschaft mbB**
**Bismarckstraße 16**
**76133 Karlsruhe (DE)**

(56) Entgegenhaltungen:
EP-B1- 0 234 706     DE-A1-102005 040 727
DE-C1- 19 641 963     US-A- 3 773 087
US-B1- 6 447 709

EP 2 441 996 B1

**Beschreibung**

Die vorliegende Erfindung betrifft ein flexibles Leitungselement, umfassend einen Balg aus einem metallischen Werkstoff und einen den Balg umgebenden Geflecht- oder Gestrickemantel, welcher Balg wenigstens einen im Wesentlichen glattzylindrischen Bereich aufweist, an den sich beiderseits gewellte Bereiche des Balgs anschließen, in welchem glattzylindrischen Bereich der Geflecht- oder Gestrickemantel im Wesentlichen vollflächig über den gesamten zylindrischen Bereich an den Balg anliegt.

Flexible Leitungselemente sind beispielsweise aus der EP 0 234 706 B1, der DE 10 2004 041 384 A1 sowie der EP 1 908 136 A1 bekannt. Alle diese Druckschriften zeigen flexible Leitungselemente mit einem Balg und einem äußeren Geflecht- oder Gestrickemantel, wobei Letzterer zum Bedämpfen des Balgs durch äußere Halteelemente gezielt an dem Balg in Anlage gebracht ist, was jedoch ausschließlich im Bereich der Wellenberge des Balgs geschieht.

Es hat sich jedoch als nachteilig herausgestellt, dass mit einer derartigen Konstruktion nicht unter allen Einsatzbedingungen die dynamische Dämpfung des Balgs sicher gewährleistet ist.

Aus der US 3,773,087 ist eine flexible Rohrleitung bekannt, die zwischen zwei gewellten Bereichen einen längeren glattzylindrischen Bereich aufweist. Sowohl die gewellten Bereiche als auch der glattzylindrische Bereich sind mit einer Außenkomponente in Form eines Geflechtsschlauchs umgeben.

Aus der EP 0 234 706 B1 ist ein abgestimmt gedämpfter Wellschlauch bekannt, bei dem eine Außenkomponente mittels einer Anzahl von Ringen jeweils im Bereich eines Wellenbergs des Wellschlauchs festgelegt ist.

Die US 6,447,709 B1 offenbart ein Verfahren zum Herstellen eines Kunststoffschlauchs mit gewellten Bereichen, in denen über einen Teil des Schlauchumfangs Wellenberge vorgesehen sind.

Der Erfindung liegt die Aufgabe zugrunde, ein flexibles Leitungselement der eingangs genannten Art samt eines zur Herstellung eines derartigen Leitungselements geeigneten Balgs anzugeben, mit denen eine verbesserte dynamische Dämpfung erreichbar ist, was auch zu einer verbesserten Standfestigkeit des flexiblen Leitungselements beiträgt. Außerdem soll die Wirtschaftlichkeit gegenüber den vorbekannten Lösungsansätzen verbessert werden.

Die Erfindung löst diese Aufgabe durch ein flexibles Leitungselement mit den Merkmalen des Anspruchs 1.
Bevorzugte Weiterbildungen des erfindungsgemäßen flexiblen Leitungselements sind Gegenstand von Unteransprüchen, deren Wortlaut hiermit durch ausdrückliche Bezugnahme in die Beschreibung aufgenommen wird, um unnötige Textwiederholungen weitgehend zu vermeiden.

Erfindungsgemäß ist ein flexibles Leitungselement, umfassend einen Balg aus einem metallischen Werkstoff und einen den Balg umgebenden Geflecht- oder Gestrickemantel, welcher Balg wenigstens einen im Wesentlichen glattzylindrischen Bereich aufweist, an den sich beiderseits gewellte Bereiche des Balgs anschließen, in welchem glattzylindrischen Bereich der Geflecht- oder Gestrickemantel im Wesentlichen vollflächig über den gesamten zylindrischen Bereich an dem Balg anliegt, dadurch gekennzeichnet, dass der Geflecht- oder Gestrickemantel in dem glattzylindrischen Bereich mittels eines äußeren Halteelements an dem Balg gehalten ist, insbesondere kraft- oder reibschlüssig.

Nach einem Grundgedanken der vorliegenden Erfindung besitzt der Balg demnach zumindest einen im Wesentlichen glattzylindrischen Bereich, welcher als eine "glatte" Stützstufe für den äußeren Geflecht- oder Gestrickemantel fungiert, was gegenüber der vorbekannten Abstützung auf den Balgwellen eine verbesserte Stützwirkung mit deutlich reduziertem Verschleißrisiko bedeutet. Aufgrund der im Wesentlichen glatten Ausbildung des Balgs in dem genannten glattzylindrischen Bereich ergibt sich zudem eine Materialeinsparung und damit eine höhere Wirtschaftlichkeit im Vergleich zu vorbekannten Lösungen, bei denen der äußere Geflecht- oder Gestrickemantel in gewellten Bereichen des Balgs gestützt wird (Stützwellen; vergleiche z. B. EP 1 908 936 A1).

Um die erreichbare Bedämpfungswirkung in besonderer Weise gegenüber dem vorbekannten Stand der Technik zu verbessern, zeichnet sich eine Weiterbildung des erfindungsgemäßen flexiblen Leitungselements dadurch aus, dass eine Breite, B, des glattzylindrischen Bereichs in Längsrichtung des Leitungselements größer ist als die Breite, Ika, eines einzelnen Balgwellenbergs. Eine besonders bevorzugte Weiterbildung des flexiblen Leitungselements des erfindungsgemäßen flexiblen Leitungselements sieht weiterhin vor, dass für die Breite des glattzylindrischen Bereichs in Längsrichtung des Leitungselements bezüglich der Breite eines einzelnen Balgwellenbergs gilt:

$$B \geq 1{,}05 \times Ika$$

Dies drückt noch einmal formelmäßig die deutlich vergrößerte Stütz- bzw. Anlagefläche des Geflecht- oder Gestrickemantels an dem Balg aus.

Mit Blick auf den Außendurchmesser des glattzylindrischen Bereichs sieht eine andere Weiterbildung des erfindungsgemäßen flexiblen Leitungselements vor, dass der glattzylindrische Bereich einen Außendurchmesser, Das, aufweist, welcher wesentlich größer ist als ein Durchmesser des Balgs im Bereich der Balgwellentäler. Insbesondere aus der DE 10 2004 041 348 A1 sind Ausgestaltungen bekannt, bei denen der Balg einen glattzylindrischen Bereich aufweist, dessen Außendurchmesser jedoch im Wesentlichen dem Durchmesser des Balgs im Bereich der Balgwellentäler entspricht. Auf diese Weise lässt sich jedoch keine und insbesondere keine vollflächige Anlage eines Geflecht- oder Gestrickemantels an dem Balg in dem genannten glattzylindrischen Bereich erreichen, was als nachteilig für das Dämpfungsverhalten zu bewerten ist. Mit der vorstehend beschriebenen Ausgestaltung vermeidet die vorliegende Erfindung gezielt diesen Nachteil des Standes der Technik.

Im Zuge einer wieder anderen Weiterbildung des erfindungsgemäßen flexiblen Leitungselements lässt sich auch für den Außendurchmesser des glattzylindrischen Bereichs ein formelmäßiger Zusammenhang bezüglich des Balginnendurchmessers, Diw, und des Balgaußendurchmessers, Daw, in den gewellten Bereichen des Balgs angeben:

$$(Diw + Daw)/2 \leq Das \leq 1{,}3 \times Daw.$$

Besonders bevorzugt ist allerdings, wenn im Rahmen einer anderen Weiterbildung des erfindungsgemäßen flexiblen Leitungselements der glattzylindrische Bereich und die gewellten Bereiche des Balgs im Wesentlichen einen gleichen Außendurchmesser aufweisen, weil dann besonders geringe Relativbewegungen zwischen Balg und Geflecht- oder Gestrickemantel auftreten, was zu einer deutlich erhöhten Standfestigkeit der Anordnung führt.

Wenn über die Längserstreckung des Balgs an mehreren Stellen glattzylindrische Bereiche vorgesehen sind, können diese im Zuge einer wieder anderen Weiterbildung des erfindungsgemäßen flexiblen Leitungselements bezüglich ihrer Lage mit Schwingungsknoten des Balgs bzw. der gesamten Leitungsanordnung im Wesentlichen übereinstimmen oder zusammenfallen, um das Dämpfungselement, d.h. den Geflecht- oder Gestrickemantel gezielt im Bereich der genannten Schwingungsknoten abzustützen.

Der Geflecht- oder Gestrickemantel kann in Weiterbildung der vorliegenden Erfindung ebenso wie der Balg in einem metallischen Werkstoff, vorzugsweise Stahl, ausgebildet sein. Möglich ist jedoch grundsätzlich auch die Verwendung eines nichtmetallischen Werkstoffs für den Geflecht- oder Gestrickemantel, vorzugsweise eines textilen Materials, Kunststoff, Carbon oder dergleichen. In diesem Zusammenhang hat sich auch eine Ausbildung des Geflecht- oder Gestrickemantels in Aramidfasern als gut geeignet herausgestellt.

Das Halteelement ist vorzugsweise derart ausgebildet, dass sich zwecks Fixierung des Geflecht- oder Gestrickemantels in den glattzylindrischen Bereichen eine definierte radiale Spannung erzeugen lässt. In diesem Zusammenhang kann weiterhin vorgesehen sein, dass das wenigstens eine Halteelement als Klemmelement, Aufpresselement, Schellenelement, Clipelement oder dergleichen ausgebildet ist.

Weitere Eigenschaften und Vorteile der vorliegenden Erfindung ergeben sich aus der nachfolgenden Beschreibung von Ausführungsbeispielen anhand der Zeichnung.

Figur 1     zeigt eine erste Ausgestaltung des erfindungsgemäßen flexiblen Leitungselements;

Figur 2     zeigt eine zweite Ausgestaltung des erfindungsgemäßen flexiblen Leitungselements; und

Figur 3     zeigt schematisch die Geometrie des glattzylindrischen Bereichs bei einer Ausgestaltung eines Balgs.

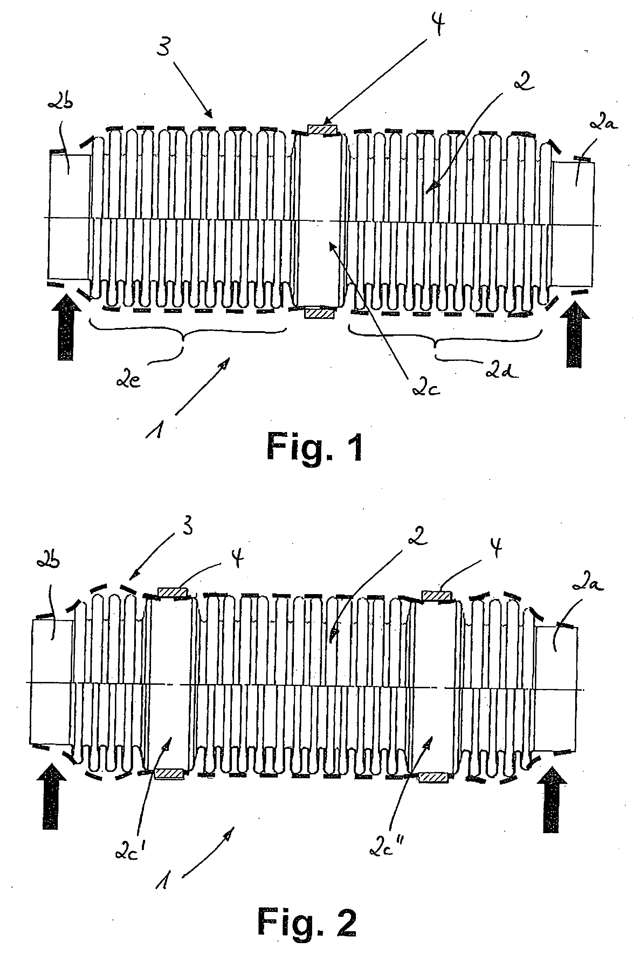

Das flexible Leitungselement ist in den Figuren 1 und 2 in seiner Gesamtheit mit dem Bezugszeichen 1 bezeichnet. Es umfasst - neben gegebenenfalls nicht explizit dargestellten weiteren Komponenten - zumindest einen Balg 2 aus einem metallischen Werkstoff und einen den Balg 2 umgebenden Geflecht- oder Gestrickemantel 3. Letzterer dient zur Bedämpfung dynamischer Schwingungen des Balgs sowie zur Längungsbegrenzung und als Schutz gegenüber äußeren Schadeinwirkungen, was dem Fachmann an sich bekannt ist.

Der Geflecht- oder Gestrickemantel 3 ist bei den in Figur 1 und Figur 2 jeweils mit einem Blockpfeil markierten Stellen auf dem Balg 2 fixiert, beispielsweise stoffschlüssig und/oder unter Verwendung einer (nicht gezeigten) Endhülse, was dem Fachmann ebenfalls an sich bekannt ist. Wie den Figuren 1 und 2 weiterhin zu entnehmen ist, erfolgt zusätzlich eine Fixierung des Geflecht- oder Gestrickemantels 3 im Bereich von glattzylindrischen, endständigen Anschlussbereichen des Balgs 2, welche in den genannten Figuren mit dem Bezugszeichen 2a und 2b bezeichnet sind.

Gemäß Figur 1 weist das flexible Leitungselement 1 bzw. der Balg 2 in der Mitte seiner Längserstreckung einen im Wesentlichen glattzylindrischen Bereich 2c auf, an den sich beiderseits, das heißt rechts und links in Figur 1 gewellte Bereiche 2d, 2e des Balgs 2 anschließen. In Figur 2 sind zwei derartige glattzylindrische Bereiche 2c', 2c" des Balgs 2 vorhanden, welche ebenfalls zwischen gewellten Bereichen des Balgs 2 eingeschlossen sind, wobei Letztere in Figur 2 aus Gründen der Übersichtlichkeit nicht explizit bezeichnet sind.

Der Geflecht- oder Gestrickemantel 3 liegt in dem genannten glattzylindrischen Bereichen 2c bzw. 2c', 2c" im Wesentlichen vollflächig, das heißt praktisch über den gesamten glattzylindrischen Bereich 2c'-2c" in dessen Längserstreckung an dem Balg 2 auf dessen Außenseite an. Um eine radiale Spannung des Geflecht- oder Gestrickemantels 3 auf dem Balg 2 gezielt einzustellen bzw. zu erhöhen, ist radial außerhalb des Geflecht- oder Gestrickemantels 3 bei den glattzylindrischen Bereichen 2c-2c" jeweils ein äußeres, ringartig ausgebildetes Halteelement 4 angeordnet, wodurch der Geflecht- oder Gestrickemantel 3 kraftschlüssig an dem Balg 2 gehalten ist.

Der Geflecht- oder Gestrickemantel 3 berührt also den Balg 2 nicht nur an dessen Wellenbergen in den gewellten Bereichen 2d, 2e, sondern darüber hinaus definiert-vollflächig in den glattzylindrischen Bereichen 2c-2c', wodurch ein verbessertes dynamisches Dämpfungsverhalten erreicht wird.

Die glattzylindrischen Bereiche 2c-2c" können mit bekannten Resonanzstellen oder Schwingungsknoten des flexiblen Leitungselements 1 im Betrieb zusammenfallen, um gezielt in diesem Bereichen eine verbesserte Bedämpfung zu erhalten. Wie der Fachmann erkennt, ist die vorliegende Erfindung jedoch nicht auf eine bestimmte Anzahl und/oder geometrische Anordnung der glattzylindrischen Bereiche 2c-2c" beschränkt.

Während der Balg 2 aus einem metallischen Werkstoff, insbesondere Stahl, gebildet ist, können für den äußeren Geflecht- oder Gestrickemantel 2 unterschiedliche Materialarten oder -kombinationen zum Einsatz kommen. Möglich ist insbesondere eine Ausbildung auch des Geflecht- oder Gestrickemantels 3 in einem metallischen Werkstoff, vorzugsweise Stahl. Alternativ können bei der Herstellung des Geflecht- oder Gestrickemantels 3 auch nichtmetallische Werkstoffe Verwendung finden, beispielsweise Aramid, Carbon oder Werkstoffe mit vergleichbaren Eigenschaften.

Die Halteelemente 4 können - wie gesagt - ringartig ausgeführt und auf den Balg 2 aufgespannt, aufgepresst, aufgeklipst oder in sonstiger Weise an dem Balg 2 festgelegt sein, insbesondere auch durch berührungslose Umformung, beispielsweise Magnetumformung.

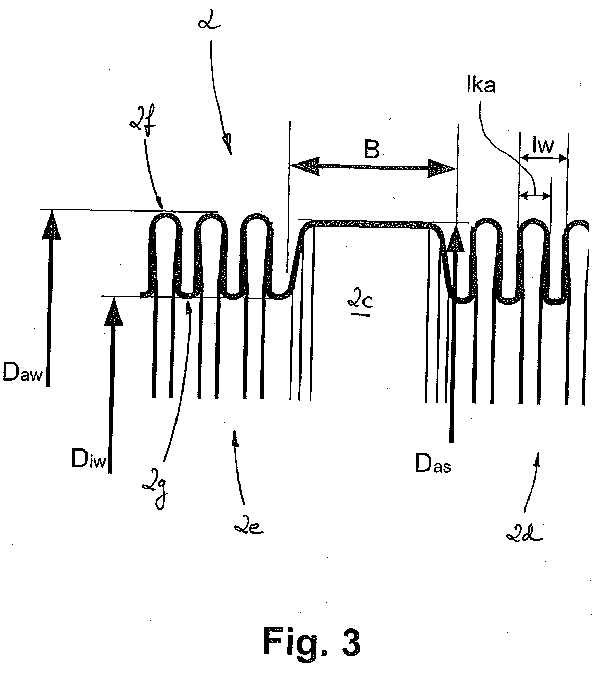

Figur 3 zeigt schematisch besondere geometrische Eigenschaften des Balgs 2, insbesondere in dem glattzylindrischen Bereich - welcher in Figur 3 mit Bezugszeichen 2c bezeichnet ist. Weiterhin sind in Figur 3 Wellenberge des Balgs 2 mit dem Bezugszeichen 2f und Wellentäler des Balgs 2 mit dem Bezugszeichen 2g bezeichnet. Die jeweiligen Scheitelpunkte der Wellenberge 2f des Balgs 2 definieren dessen Außendurchmesser Daw, und die jeweiligen Scheitelpunkte der Wellentäler 2g des Balgs 2 definieren dessen Innendurchmesser Diw. Der Außendurchmesser des Balgs 2 in dem glattzylindrischen Bereich 2c ist mit dem Bezugszeichen Das bezeichnet. Bezugszeichen B gibt die Breite des glattzylindrischen Bereichs 2c einschließlich seiner seitlichen Flanken in Richtung der Längserstreckung des Balgs 2 an, wie in Figur 3 eingezeichnet. Weiterhin gibt Bezugszeichen Ika die (Scheitel-)Breite eines Wellenbergs 2f des Balgs 2 an, während Bezugszeichen lw eine "Periodenlänge" des Balgwellenprofils bezeichnet.

Damit der in Figur 3 gezeigte Balg 2 bei Verwendung innerhalb eines flexiblen Leitungselements 1 gemäß Figur 1 oder 2 optimal zu der angestrebten verbesserten Dämpfungsfunktion beitragen kann, gelten für die in Figur 3 gezeigten Abmessungen vorteilhafter Weise die nachfolgend aufgeführten Bedingungen:

$$B \geq 1{,}05 \times Ika$$

und

$$(Diw + Daw)/2 \leq Das \leq 1{,}3 \times Daw.$$

In Worten ausgedrückt bedeutet dies, dass die Breite B des glattzylindrischen Bereichs 2c derart gewählt bzw. ausgebildet ist, dass sie die genannte Breite Ika der Wellenberge 2f des Balgs 2 um wenigstens 5 % übersteigt. Hierdurch sowie aufgrund der Tatsache, dass der glattzylindrische Bereich 2c im Gegensatz zu den Scheitelbereichen der Wellenberge 2f glatt ausgebildet ist, ergibt sich auf diese Weise eine deutlich vergrößerte Anlagefläche für den Geflecht- oder Gestrickemantel 3 gemäß den Figuren 1 und 2. Im Rahmen der in Figur 3 dargestellten bevorzugten Ausgestaltung des Balgs 2 beträgt der Wert für die Breite B sogar in etwa das Fünffache der Scheitelbreite Ika, B ≈ 5 x Ika.

Für den Außendurchmesser Das des Balgs 2 in dem glattzylindrischen Bereich 2c ist vorgesehen, dass dieser mindestens so groß ist, wie der Mittelwert aus dem Außendurchmesser Daw und dem Innendurchmesser Diw des Balgs 2 in den gewellten Bereichen 2d, 2e. Vorzugsweise entspricht der Außendurchmesser Das des Balgs 2 in dem glattzylindrischen Bereich 2c im Wesentlichen gerade dem Außendurchmesser Daw des Balgs 2 in den gewellten Bereichen 2d, 2e, wie in Figur 3 angenähert dargestellt. Auf diese Weise sind Relativbewegungen zwischen Balg 2 und Geflecht- oder Gestrickemantel 3 (vgl. Figuren 1 und 2) minimiert, was insbesondere die Standzeit der Anordnung verbessern kann.

Für die Obergrenze des Außendurchmessers Das des Balgs 2 in dem glattzylindrischen Bereich 2c gilt, dass dieser den Außendurchmesser Daw des Balgs 2 in den gewellten Bereichen 2d, 2e um maximal 30 % übersteigt. Allgemein gilt, dass zu starke Abweichungen des Außendurchmessers Das des Balgs 2 in dem glattzylindrischen Bereich 2c von dem Außendurchmesser Daw des Balgs 2 in den gewellten Bereichen 2d, 2e zu einer ungünstigen globalen Anlagesituation des Geflecht- oder Gestrickemantels 3 an dem Balg 2 führen, was aus Dämpfungsgründen zu vermeiden ist.

**Patentansprüche**

1. Flexibles Leitungselement (1), umfassend einen Balg (2) aus einem metallischen Werkstoff und einen den Balg (2) umgebenden Geflecht- oder Gestrickemantel (3), welcher Balg (2) wenigstens einen im Wesentlichen glattzylindrischen Bereich (2c, 2c', 2c") aufweist, an den sich beiderseits gewellte Bereiche (2d, 2e) des Balgs anschließen, in welchem glattzylindrischen Bereich (2c, 2c', 2c") der Geflecht- oder Gestrickemantel (3) im Wesentlichen vollflächig über den gesamten zylindrischen Bereich an dem Balg anliegt, **dadurch gekennzeichnet, dass** der Geflecht- oder Gestrickemantel (3) in dem glattzylindrischen Bereich mittels eines äußeren Halteelements (4) an dem Balg (2) gehalten ist.

2. Flexibles Leitungselement (1) nach Anspruch 1, **dadurch gekennzeichnet,**
   **dass** eine Breite, B, des glattzylindrischen Bereichs (2c) in Längsrichtung des Leitungselements größer ist als die Breite, Ika, eines einzelnen Balgwellenbergs (2f).

3. Flexibles Leitungselement (1) nach Anspruch 1 oder 2,
   **dadurch gekennzeichnet,**
   **dass** für die Breite, B, des glattzylindrischen Bereichs (2c) in Längsrichtung des Leitungselements bezüglich der Breite, Ika, eines einzelnen Balgwellenbergs (2f) gilt:

$$B \geq 1{,}05 \times Ika$$

4. Flexibles Leitungselement (1) nach mindestens einem der vorangehenden Ansprüche, **dadurch gekennzeichnet, dass** der glattzylindrische Bereich (2c) einen Außendurchmesser, Das, aufweist, welcher wesentlich größer ist als ein Durchmesser des Balgs (2) im Bereich der Balgwellentäler (2g).

5. Flexibles Leitungselement (1) nach mindestens einem der vorangehenden Ansprüche, **dadurch gekennzeichnet, dass** für den Außendurchmesser, Das, des glattzylindrischen Bereichs (2c) bezüglich dem Balginnendurchmesser, Diw, und dem Balgaußendurchmesser, Daw, in den gewellten Bereichen (2d, 2e) gilt:

$$(Diw + Daw)/2 \leq Das \leq 1{,}3 \times Daw.$$

6. Flexibles Leitungselement (1) nach mindestens einem der vorangehenden Ansprüche, **dadurch gekennzeichnet, dass** der glattzylindrische Bereich (2c) und die gewellten Bereiche (2d, 2e) des Balgs (2) im Wesentlichen einen gleichen Außendurchmesser (Daw, Das) aufweisen.

7. Flexibles Leitungselement (1) nach mindestens einem der vorangehenden Ansprüche, **dadurch gekennzeichnet, dass** über die Längserstreckung des Balgs (2) an mehreren Stellen glattzylindrische Bereiche (2c', 2c") vorgesehen sind, deren Lage vorzugsweise mit Schwingungsknoten des Balgs im Wesentlichen übereinstimmt.

8. Flexibles Leitungselement (1) nach mindestens einem der vorangehenden Ansprüche, **dadurch gekennzeichnet, dass** der Geflecht- oder Gestrickemantel (3) in einem metallischen Werkstoff, vorzugsweise Stahl, oder in einem nicht-metallischen Werkstoff, vorzugsweise einem textilen Material, Kunststoff, Carbon oder dergleichen ausgebildet ist.

9. Flexibles Leitungselement (1) nach mindestens einem der vorangehenden Ansprüche, **dadurch gekennzeichnet, dass** das Halteelement (4) zum Erzeugen einer definierten radialen Spannung ausgebildet ist, vorzugsweise als Klemmelement, Aufpresselement, Schellenelement, Clipelement oder dergleichen.

## Claims

1. Flexible duct element (1), comprising a bellows (2) made of a metallic material and a braided or knitted jacket (3) that surrounds the bellows (2), which bellows (2) has at least one substantially plain-cylindrical region (2c, 2c', 2c") which is adjoined on both sides by corrugated regions (2d, 2e) of the bellows, in which plain-cylindrical region (2c, 2c', 2c") the braided or knitted jacket (3) makes substantially full-surface contact with the bellows over the entire cylindrical region, **characterised in that** the braided or knitted jacket (3) is held on the bellows (2) in the plain-cylindrical region by means of an external holding element (4).

2. Flexible duct element (1) according to claim 1, **characterised in that**
   a width, B, of the plain-cylindrical region (2c) in the longitudinal direction of the duct element is greater than the width, Ika, of an individual corrugation peak (2f).

3. Flexible duct element (1) according to claim 1 or 2, **characterised in that**
   in respect of the width, B, of the plain-cylindrical region (2c) in the longitudinal direction of the duct element relative to the width, Ika, of an individual corrugation peak (2f), the following applies:

$$B \geq 1.05 \times Ika$$

4. Flexible duct element (1) according to at least one of the preceding claims, **characterised in that** the plain-cylindrical region (2c) has an external diameter, Das, that is substantially greater than a diameter of the bellows (2) in the region of the corrugation troughs (2g).

**5.** Flexible duct element (1) according to at least one of the preceding claims, **characterised in that** in respect of the external diameter, Das, of the plain-cylindrical region (2c) relative to the internal diameter, Diw, of the bellows and the external diameter, Daw, of the bellows in the corrugated regions (2d, 2e), the following applies:

$$(Diw + Daw)/2 \leq Das \leq 1.3 \text{ x Daw}.$$

**6.** Flexible duct element (1) according to at least one of the preceding claims, **characterised in that** the plain-cylindrical region (2c) and the corrugated regions (2d, 2e) of the bellows (2) have substantially the same external diameter (Daw, Das).

**7.** Flexible duct element (1) according to at least one of the preceding claims, **characterised in that** plain-cylindrical regions (2c', 2c") are provided at a plurality of locations over the longitudinal extent of the bellows (2), the positions of which plain-cylindrical regions preferably substantially correspond to vibration nodes of the bellows.

**8.** Flexible duct element (1) according to at least one of the preceding claims, **characterised in that** the braided or knitted jacket (3) is formed in a metallic material, preferably steel, or in a non-metallic material, preferably a textile material, plastics material, carbon or the like.

**9.** Flexible duct element (1) according to at least one of the preceding claims, **characterised in that** the holding element (4) is configured for generating a defined radial tension, preferably in the form of a clamping element, press-on element, clamp element, clip element or the like.

**Revendications**

**1.** Elément de conduite flexible (1), comprenant un soufflet (2) en un matériau métallique et une gaine (3) tressée ou à mailles entourant le soufflet (2), lequel soufflet (2) présente au moins une région pour l'essentiel cylindrique et lisse (2c, 2c', 2c") à laquelle se raccordent de part et d'autre des régions ondulées (2d, 2e) du soufflet, région cylindrique et lisse (2c, 2c', 2c") dans laquelle la gaine (3) tressée ou à mailles s'applique contre le soufflet pour l'essentiel en pleine surface, sur toute la région cylindrique, **caractérisé en ce que** la gaine (3) tressée ou à mailles est, dans la région cylindrique et lisse, maintenue sur le soufflet (2) au moyen d'un élément de maintien extérieur (4).

**2.** Elément de conduite flexible (1) selon la revendication 1, **caractérisé en ce qu'**une largeur, B, de la région cylindrique et lisse (2c) est, dans la direction longitudinale de l'élément de conduite, plus grande que la largeur, lka, d'un sommet individuel (2f) d'ondulation du soufflet.

**3.** Elément de conduite flexible (1) selon la revendication 1 ou 2, **caractérisé en ce que** la relation suivante s'applique à la largeur, B, de la région cylindrique et lisse (2c) dans la direction longitudinale de l'élément de conduite par rapport à la largeur, lka, d'un sommet individuel (2f) d'ondulation du soufflet :

$$B \geq 1{,}05 \text{ x lka}.$$

**4.** Elément de conduite flexible (1) selon au moins une des revendications précédentes, **caractérisé en ce que** la région cylindrique et lisse (2c) présente un diamètre extérieur, Das, qui est nettement plus grand qu'un diamètre du soufflet (2) dans la région des creux d'ondulation (2g) du soufflet.

**5.** Elément de conduite flexible (1) selon au moins une des revendications précédentes, **caractérisé en ce que** la relation suivante s'applique au diamètre extérieur, Das, de la région cylindrique et lisse (2c) par rapport au diamètre intérieur du soufflet, Diw, et au diamètre extérieur du soufflet, Daw, dans les régions ondulées (2d, 2e) :

$$(Diw + Daw)/2 \leq Das \leq 1{,}3 \text{ x Daw}.$$

**6.** Elément de conduite flexible (1) selon au moins une des revendications précédentes, **caractérisé en ce que** la région cylindrique et lisse (2c) et les régions ondulées (2d, 2e) du soufflet (2) présentent pour l'essentiel un diamètre extérieur identique (Daw, Das).

**7.** Elément de conduite flexible (1) selon au moins une des revendications précédentes, **caractérisé en ce que** des régions cylindriques et lisses (2c', 2c") sont prévues en plusieurs endroits sur l'étendue longitudinale du soufflet (2), régions dont la position coïncide de préférence pour l'essentiel avec des noeuds de vibration du soufflet.

**8.** Elément de conduite flexible (1) selon au moins une des revendications précédentes, **caractérisé en ce que** la gaine (3) tressée ou à mailles est réalisée dans un matériau métallique, de préférence de l'acier, ou dans un matériau non métallique, de préférence un matériau textile, une matière plastique, du carbone ou analogues.

**9.** Elément de conduite flexible (1) selon au moins une des revendications précédentes, **caractérisé en ce que** l'élément de maintien (4) est conçu pour produire une contrainte radiale définie, de préférence sous la forme d'un élément de serrage, d'un élément presseur, d'un élément formant collier, d'un élément formant clip ou analogues.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0234706 B1
- DE 102004041384 A1
- EP 1908136 A1
- US 3773087 A
- US 6447709 B1
- EP 1908936 A1
- DE 102004041348 A1